Europäisches Patentamt

European Patent Office

Office européen des brevets

(11) Publication number: **0 273 877**
**B1**

# EUROPEAN PATENT SPECIFICATION

(45) Date of publication of patent specification: **30.01.91**

(21) Application number: **87830414.6**

(22) Date of filing: **20.11.87**

(51) Int. Cl.⁵: **B 60 K 23/08,** B 60 K 17/34

(54) **Permanent four-wheel-drive transmission for a vehicle with a transverse engine.**

(30) Priority: **23.12.86 IT 5425586 u**

(43) Date of publication of application:
**06.07.88 Bulletin 88/27**

(45) Publication of the grant of the patent:
**30.01.91 Bulletin 91/05**

(84) Designated Contracting States:
**DE ES FR GB SE**

(56) References cited:
**EP-A-0 226 666**
**EP-A-0 246 926**
**DE-A-3 317 247**
**US-A-4 431 079**
**US-A-4 476 952**

(73) Proprietor: **FIAT AUTO S.p.A.**
**Corso Giovanni Agnelli 200**
**I-10135 Torino (IT)**

(72) Inventor: **Falzoni, Gian Luigi**
**Via Malta, 36/10 bis**
**I-10141 Torino (IT)**
Inventor: **Cordero, Federico**
**Via Passo Buole, 166**
**I-10135 Torino (IT)**

(74) Representative: **Buzzi, Franco et al**
**c/o Jacobacci-Casetta & Perani S.p.A. Via Alfieri,**
**17**
**I-10121 Torino (IT)**

Courier Press, Leamington Spa, England.

# Description

The present invention relates to a permanent four-wheel-drive transmission for a motor vehicle with a transverse object, such as defined in the pre-characterising portion of Claim 1.

The object of the present invention is to produce a relatively simple and compact transmission of reduced size.

This object is achieved by virtue of the features set forth in the characterising part of claim 1.

Compared to known devices designed to carry out a similar function by means of torque-divider systems applied directly to the transmission shaft or between the latter and the rear differential, the transmission according to the invention has the advantage of appreciably reducing the bulk and the weight bearing on the transmission, as well as being structurally simpler and thus more economical.

Conveniently, the transmission unit includes a countershaft adjacent and parallel to the front half-shaft and carrying a gear which meshes with the ring gear, and an output unit including a pair of bevel gears of which one is fast with the countershaft and the other is kinematically connected to the rear differential.

The front differential, the FERGUSON coupling, and the transmission unit are contained in a common casing fixed to the gearbox.

The invention will now be described in detail with reference to the appended drawings, provided purely by way of non-limiting example, in which:

Figure 1 is a schematic perspective view of a four-wheel-drive transmission according to the invention and

Figure 2 is a partially sectioned view of a detail of the transmission system of Figure 1, on an enlarged scale.

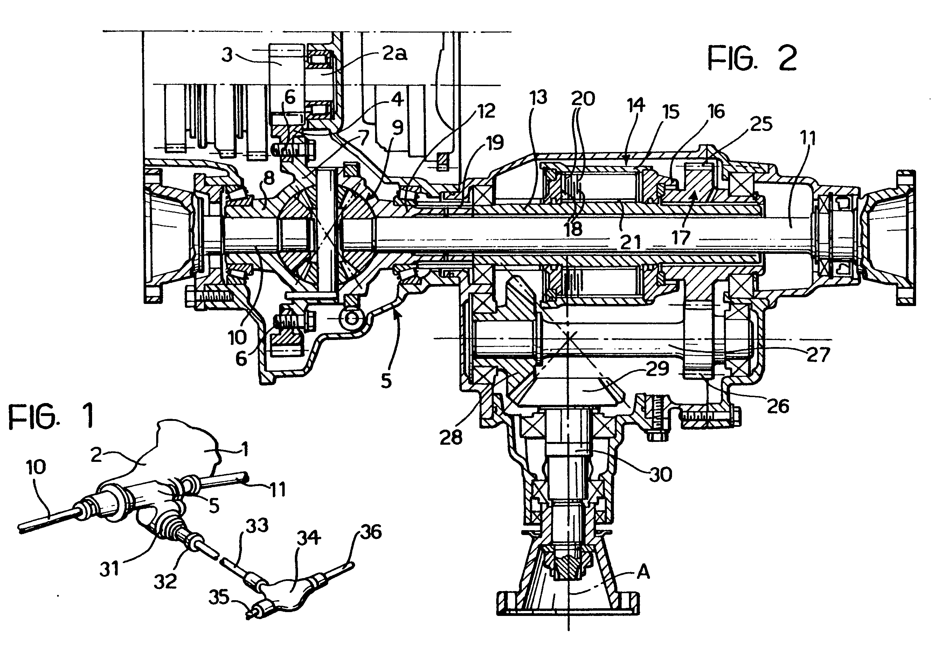

In Figure 1, an internal combustion engine, schematically indicated 1, is intended to be mounted in the front part of a motor vehicle with its axis arranged transverse the longitudinal axis of the vehicle, indicated A in Figure 2. The engine 1 is provided with a gearbox 2, normally of the type with permanently engaged gears, having a main shaft, not illustrated, and a driven shaft 2a also arranged transverse the longitudinal axis A of the vehicle.

A gear, indicated 3, is carried by the driven shaft 2a of the gearbox and meshes with a ring gear 4 supported for rotation by a casing, generally indicated 5, fixed to the gearbox.

The ring gear 4 is joined by means of bolts 6 to the housing 7 of an epicyclic bevel-gear-type front differential 9 for transmitting the torque to the front wheels of the motor vehicle by means of two half-shafts 10, 11 in the manner explained below.

The housing 7 of the differential 9 has on one side a tubular appendage 8 of reduced length coaxial with the half-shaft 10, and on the opposite side a tubular appendage 12 coaxial with the other half-shaft 11. The tubular appendage 12 is coupled for rotation with a hollow shaft 13 extending coaxially on the half-shaft 11 by means of a splined sleeve 19.

A FERGUSON-type fluid coupling of known type, generally indicated 14, is housed within the casing 5. In conventional manner, the coupling 14 consists of a cylinder 15 carried by the tubular shaft 13 and coupled for rotation with a tubular hub 17 coaxially rotatably mounted on the outer end of the hollow shaft 13 by means of a toothed coupling 16. In known manner, the cylinder 15 contains two series of transmission discs, schematically indicated 18, 20, of which the first is coupled for rotation with the cylinder 15 and the second is coupled for rotation with a splined portion 21 of the hollow shaft 13.

The tubular hub 17 carries a ring gear 25 which meshes with a gear 26 carried by one end of a countershaft 27 which is also supported for rotation by the casing 5. The shaft 27 is adjacent and parallel to the half-shaft 11 and carries on its opposite end a bevel gear 28 which meshes with a bevel pinion 29 on the inner end of a shaft 30 supported rotatably within a cylinder appendage 31 of the casing 5, arranged along the longitudinal axis A of the vehicle. The end of the shaft 30 opposite the bevel pinion 29 is connected, by means of a constant-velocity universal joint, generally indicated 32 in Figure 1, to a transmission shaft 33 for transmitting the torque to a conventional rear differential 34. The differential 34 transmits the torque to the half-shafts 35, 36 of the rear wheels of the vehicle.

In operation, the torque imparted by the output gear 3 to the housing 7 of the front differential 9 is transmitted through the splined sleeve 19 to the hollow shaft 13 on which the FERGUSON fluid coupling 14 is mounted. When the vehicle is running under conditions of normal grip of the front wheels, the transmission shaft 33 is not driven by the hollow shaft 13. If slippage of the front axle occurs in slippery road conditions, the FERGUSON coupling automatically comes into operation to transmit torque to the rear axle by means of the toothed coupling 16, the gears 25 and 26, the shaft 27, the bevel gears 28, 31, the shafts 30 and 33, and the rear differential 34.

## Claims for the Contracting States: ES SE

1. A permanent four-wheel-drive transmission for a motor vehicle with a transverse engine comprising a gearbox (2) having an output member (3) which drives an epicyclic front differential (9) driving the half-shafts (10, 11) of the front wheels of the vehicle, characterised in that it comprises a FERGUSON-type fluid coupling (14) carried by a hollow shaft (13) coaxial with one of the half-shafts (11) and fixed for rotation with the housing (7) of the front differential (9), the FERGUSON coupling (14) being arranged to cause rotation of a tubular hub (17) coaxially rotatably mounted on the hollow shaft (13) and carrying a ring gear (25), and a rear differential (34) for transmitting the torque to the half-shafts (35, 36) of the rear wheels of the vehicle and driven by the ring gear (25) through a transmission unit (26, 27, 28, 29, 30, 33).

2. A transmission according to Claim 1, characterised in that the transmission unit comprises a countershaft (27) adjacent and parallel to the front half-shaft (11) and carrying a gear (26) which meshes with the ring gear (25), and an output unit including a pair of bevel gears (28, 29) of which one is fast with the countershaft (27) and the other is kinematically connected to the rear differential (34).

3. A transmission according to Claim 1 or Claim 2, characterised in that the front differential (9), the FERGUSON coupling (14) and the transmission unit (26, 27, 28, 29, 30) are contained in a common casing fixed to the gearbox (2).

## Claim for the Contracting States: DE FR GB

A permanent four-wheel-drive transmission for a motor vehicle with a transverse engine comprising a gearbox (2) having an output member (3) which directly drives the housing (7) of an epicyclic front differential (9) driving the half-shafts (10, 11) of the front wheels of the vehicle, characterised in that it comprises a FERGUSON-type fluid coupling (14) carried by a hollow shaft (13) coaxial with one of the half-shafts (11) and fixed for rotation with the housing (7) of the front differential (9), the FERGUSON coupling (14) being arranged to cause rotation of a tubular hub (17) coaxially rotatably mounted on the hollow shaft (13) and carrying a ring gear (25), and a rear differential (34) for transmitting the torque to the half-shafts (35, 36) of the rear wheels of the vehicle and driven by the ring gear (25) through a transmission unit (26, 27, 28, 29, 30, 33).

## Patentansprüche für die Vertragsstaaten: ES SE

1. Ständiger Vierradantrieb eines Kraftfahrzeuges mit quergestelltem Motor, umfassend ein Getriebe (2) mit einem Ausgangselement (3), welches ein die Halbwellen (10, 11) der Vorderräder des Kraftfahrzeuges antreibendes, vorderes Epizykloid-Differentialgetriebe (9) antreibt, dadurch gekennzeichnet, daß er eine Fluidkupplung (14) nach Art einer FERGUSON-Fluidkupplung umfaßt, die mittels einer Hohlwelle (13) koaxial zu einer der Halbwellen (11) gehalten ist und die für Drehbewegungen mit dem Gehäuse (7) des vorderen Differentialgetriebes (9) verbunden ist, wobei die FERGUSON-Kupplung (14) vorgesehen ist, um die Rotation einer röhrenförmigen, koaxial drehbar auf der Hohlwelle (13) angeordneten und ein Ringzahnrad (25) tragenden Nabe (17) zu bewirken, und daß er weiterhin ein hinteres Differentialgetriebe (34) zur Übertragung des Drehmoments zu den Halbwellen (35, 36) der Hinterräder des Kraftfahrzeuges umfaßt, welches durch das Ringzahnrad (25) über eine Antriebseinheit (26, 27, 28, 29, 30, 33) angetrieben wird.

2. Antrieb nach Anspruch 1, dadurch gekennzeichnet, daß die Antriebseinheit eine zu der vorderen Halbwelle (11) benachbarte und parallel zu dieser verlaufende Gegenwelle (27) umfaßt, die ein Zahnrad (26) trägt, welches mit dem Ringzahnrad (25) kämmt, und daß die Antriebseinheit eine Ausgangseinheit umfaßt, die ein Kegelräderpaar (28, 29) aufweist, von denen das eine auf der Gegenwelle (27) fest angebracht ist und das andere kinematisch mit dem hinteren Differentialgetriebe (34) verbunden ist.

3. Antrieb nach einem der Ansprüche 1 oder 2, dadurch gekennzeichnet, daß das vordere Differentialgetriebe (9), die FERGUSON-Kupplung (14) und die Antriebseinheit (26, 27, 28, 29, 30) in einem gemeinsamen Gehäuse untergebracht sind, das an dem Getriebe (2) angebracht ist.

## Patentanspruch für die Vertragsstaaten: DE FR GB

Ständiger Vierradantrieb eines Kraftfahrzeuges mit quergestelltem Motor, umfassend ein Getriebe (2) mit einem Ausgangselement (3), das direkt das Gehäuse (7) eines die Halbwellen (10, 11) der Vorderräder des Kraftfahrzeuges antreibenden, vorderen Epizykloid-Differentialgetriebes (9) antreibt, dadurch gekennzeichnet, daß er eine Fluidkupplung (14) nach Art einer FERGUSON-Fluidkupplung umfaßt, die mittels einer Hohlwelle (13) koaxial zu einer der Halbwellen (11) gehalten ist und die für Drehbewegungen mit dem Gehäuse (7) des vorderen Differentialgetriebes (9) verbunden ist, wobei die FERGUSON-Kupplung (14) vorgesehen ist, um die Rotation einer koaxial drehbar auf der Hohlwelle (13) angeordneten und ein Ringzahnrad (25) tragenden, röhrenförmigen Nabe (17) zu bewirken, und daß er ein hinteres Differentialgetriebe (34) zur Übertragung des Drehmoments zu den Halbwellen (35, 36) der Hinterräder des Kraftfahrzeuges umfaßt, welches durch das Ringzahnrad (25) über eine Antriebseinheit (26, 27, 28, 29, 30, 33) angetrieben wird.

## Revendications pour les Etats Contractants: ES SE

1. Transmission à quatre roues motrices permanentes destinée à un véhicule à moteur ayant un moteur transversal, comprenant une boîte de vitesse (2) qui a un élément de sortie (3) qui entraîne un différentiel épicycloïdal avant (9) entraînant les demi-arbres (10, 11) des roues avant du véhicule, caractérisée en ce qu'elle comprend un accouplement hydraulique (14) de type "Ferguson" porté par un arbre creux (13) coaxial à l'un des demi-arbres (11) et fixé afin qu'il tourne avec le boîtier (7) du différentiel avant (9), l'accouplement "Ferguson" (14) étant disposé afin qu'il provoque la rotation d'un moyeu tubulaire (17) monté afin qu'il tourne coaxialement sur l'arbre creux (13) et portant une couronne dentée (25), et un différentiel arrière (34) destiné à transmettre le couple aux demi-arbres (35, 36) des roues arrière du véhicule et entraîné par la couronne dentée (25) par l'intermédiaire d'un ensemble de transmission (26, 27, 28, 29, 30, 33).

2. Transmission selon la revendication 1, caractérisée en ce que l'ensemble de transmission comprend un arbre auxiliaire (27) adjacent et parallèle au demi-arbre avant (11) et portant un pignon (26) qui est en prise avec la couronne dentée (25), et un ensemble de sortie comprenant deux pignons coniques (28, 29) dont l'un est fixé à l'arbre auxiliaire (27) et dont l'autre est connecté cinématiquement au différentiel arrière (34).

3. Transmission selon la revendication 1 ou 2, caractérisée en ce que le différentiel avant (9), l'accouplement "Ferguson" (14) et l'ensemble de transmission (26, 27, 28, 29, 30) sont logés dans un carter commun fixé à la boîte de vitesse (2).

**Revendication pour les Etats Contractants: DE FR GB**

Transmission à quatre roues motrices permanentes destinée à un véhicule à moteur ayant un moteur transversal, comprenant une boîte de vitesse (2) qui a un élément de sortie (3) qui entraîne directement le boîtier (7) d'un différentiel épicycloïdal avant (9) entraînant les demi-arbres (10, 11) des roues avant du véhicule, caractérisée en ce qu'elle comprend un accouplement hydraulique (14) de type "Ferguson" porté par un arbre creux (13) coaxial à l'un des demi-arbres (11) et fixé afin qu'il tourne avec le boîtier (7) du différentiel avant (9), l'accouplement "Ferguson" (14) étant disposé afin qu'il provoque la rotation d'un moyeu tubulaire (17) monté afin qu'il tourne coaxialement sur l'arbre creux (13) et portant une couronne dentée (25), et un différentiel arrière (34) destiné à transmettre le couple aux demi-arbres (35, 36) des roues arrière du véhicule et entraîné par la couronne dentée (25) par l'intermédiaire d'un ensemble de transmission (26, 27, 28, 29, 30, 33).

FIG. 2

FIG. 1

1